# EUROPEAN PATENT SPECIFICATION

(11) **EP 2 562 050 B1**
(45) Date of publication and mention of the grant of the patent: **23.04.2014**
(21) Application number: 12181209.3
(22) Date of filing: 21.08.2012
(51) Int. Cl.: B60R 11/02

(54) **Display apparatus**
Anzeigevorrichtung
Appareil d'affichage

(30) Priority: 26.08.2011 JP 2011184489; 26.08.2011 JP 2011184492
(43) Date of publication of application: 27.02.2013
(73) Proprietor: Alpine Electronics, Inc., Tokyo (JP)
(72) Inventor: Kato, Kazunari, Iwaki-city, Fukushima (JP)
(74) Representative: Klunker . Schmitt-Nilson . Hirsch

(56) References cited:
- EP-A1- 2 029 394
- WO-A1-2011/060963
- WO-A2-2009/127439
- DE-A1-102009 040 702
- JP-A- 2006 123 883
- JP-A- 2008 074 303

## Description

### BACKGROUND OF THE INVENTION

### 1. Field of the Invention

The present invention relates to display apparatuses each including a display panel which includes a liquid crystal display and moves from a stored position where the panel is stored in a casing to a projecting position where the panel upwardly projects from the casing, and in particular, relates to a display apparatus including a lid member which closes an opening through which the display panel projects.

### 2. Description of the Related Art

WO 2011/060963 A1, which discloses a display apparatus according to the preamble of claim 1, discloses a storage compartment comprising a storage space, a cover flap covering the opening of the storage space, said flap releasing the opening in an opened position and closing it in a closed position, and a mechanism for opening and closing the cover flap, wherein the mechanism comprises a first coupling rod that is mounted on a first pivot rotatably about a first axis in the storage space and comprises a second pivot spaced from the first pivot, and a lever arranged rigidly on the cover flap is mounted on the second pivot rotatably about a second axis. A gear wheel section that is in engagement with a further rotatably mounted gear wheel is present on the cover flap, wherein the gear wheel is also arranged on the coupling rod.

Japanese Unexamined Patent Application Publication Nos. 2008-74303, 2007-176482, and 2009-538774 disclose display apparatuses suitable to be installed on cars. Such a display apparatus includes a casing which is positioned in an opening disposed in a dashboard of a car and a display which is capable of shifting from a stored position where the display is stored in the casing to a projecting position where the display projects out of the opening. While the display is positioned in the projecting position, a person sitting in the car can see a screen of the display.

The display apparatus includes a door member and/or a cover operatively connected to the display. When the display is stored in the casing, the opening is closed by the door member or cover.

In each of the display apparatuses disclosed in Japanese Unexamined Patent Application Publication Nos. 2008-74303 and 2007-176482, a driving disk or control disk is driven by a motor such that the door member or cover is moved between a closing position where the opening is closed and an opening position where the opening is opened. In the display apparatus disclosed in Japanese Unexamined Patent Application Publication No. 2009-538774, a link mechanism is driven by a motor such that the cover is moved between a closing position and an opening position.

The above-described display apparatuses have an extremely complex structure because each apparatus is provided with a mechanism for translating power produced by the motor into a motion of the door member or cover. Furthermore, in each of the above apparatuses, the same motor allows the display and the door member or cover to move. For synchronization between movement of the display and that of the door member or cover, it is therefore necessary to use a driving mechanism having a complex structure.

The display apparatus disclosed in Japanese Unexamined Patent Application Publication No. 2008-74303 includes the door member which closes the opening of the casing while the display (display panel unit) is stored and the cover which closes a clearance between the display and an edge of the opening while the display upwardly projects from the opening. Such a structure including two members for closing the opening, namely, the door member and the cover, is composed of many parts. Accordingly, a driving mechanism for operating both the door member and the cover also has a complex structure.

### SUMMARY OF THE INVENTION

The present invention intends to solve the above-described problems. Accordingly, it is an object of the present invention to provide a display apparatus capable of moving a lid member for closing a movement region of a display panel without a complicated driving mechanism, such as a driving disk or a link mechanism, driven by a motor.

An object of the present invention is to provide a display apparatus capable of, when a display panel is in a projecting position, closing a space where the display panel is not positioned in a movement region using a lid member.

An aspect of the present invention provides a display apparatus according to claim 1.

In the display apparatus according to this aspect of the present invention, while the display panel is in the stored position, the movement region in the casing is closed by the lid member. While the display panel is in the projecting position, the space where the display panel is not positioned in the movement region is closed by the same lid member. Since the movement region is closed by the single lid member both while the display panel is in the stored position and while the display panel is in the projecting position, the number of parts can be minimized. Furthermore, a clearance does not tend to be produced in the movement region, thus keeping foreign matter from entering the casing through the movement region.

Preferably, the lid member driving mechanism uses force produced by the movement of the display panel from the projecting position to the stored position to cause the lid member to move to the closing position against the biasing force of the spring member.

In the display apparatus according to this aspect of the present invention, since the lid member is moved to the opening position by the biasing force of the spring member and is moved to the closing position and the partially closing position by force produced by the movement of the display panel, the structure of the display apparatus is made simpler than a structure in which the lid member is moved directly by power of a motor. Furthermore, operation timing when the display panel is moved from the stored position to the projecting position can be synchronized with operation timing when the lid member is moved from the closing position to the opening position. Advantageously, the lid member can be promptly moved to the opening position by force of the spring member.

The transfer mechanism may include an advancing and receding member that pivotably supports a base end of the display panel, an advancing-receding driving mechanism that allows the advancing and receding member to advance or recede, and a display panel guide that allows the display panel to change a posture from the stored position to the projecting position when the advancing and receding member moves from a back position to a front position. The lid member driving mechanism may include a lid member guide that guides the lid member between the opening position and the closing position and a link mechanism that allows the lid member to move. When the advancing and receding member moves to the front position, force produced by the movement of the advancing and receding member causes the link mechanism to be operated such that the lid member moves to the partially closing position.

When the advancing and receding member moves to the back position, the advancing and receding member may press the link mechanism such that the lid member moves to the closing position.

Preferably, the link mechanism elastically presses the lid member, shifted to the partially closing position, against the display panel positioned in the movement region. The clearance between the display panel and the lid member can be reliably closed under the condition that the lid member is pressed against the display panel in the projecting position by elastic force.

The link mechanism may include a link that presses the lid member toward the display panel positioned in the movement region such that the lid member moves to the partially closing position. The link may be an elastic link that elastically deforms to press the lid member against the display panel. Accordingly, the structure of an elasticity providing mechanism of the link mechanism can be simplified.

In the apparatus according to this aspect of the present invention, a body panel that covers the casing may be disposed above a ceiling portion of the casing, the body panel may have an opening that faces the movement region, the display panel in the projecting position may upwardly project from the opening, the lid member in the partially closing position may close a clearance in which the display panel is not positioned in the opening, and the lid member in the closing position may close the opening while the display panel is in the stored position.

Preferably, when moving to the closing position, the lid member is raised higher than the ceiling portion of the casing such that the lid member closes the opening from below. Accordingly, the opening in the body panel can be closed from below by the lid member without any clearance.

Preferably, the display panel includes a ridge on a first surface of the display panel opposite a second surface thereof facing the lid member, the ridge facing lower part of an edge of the opening in the body panel while the display panel is in the projecting position.

In the above structure, clearances do not tend to be produced at the front and rear of the display panel in the opening, thus keeping foreign matter from entering the casing through the opening while the display panel is in the projecting position.

Preferably, while the display panel is in the stored position, a screen of the display panel faces the bottom surface of the casing. With this arrangement, the casing can be designed in low profile.

### BRIEF DESCRIPTION OF THE DRAWINGS

Fig. 1 is a perspective view of the display apparatus according to an embodiment of the present invention, the display apparatus being in a state in which a display panel is in a projecting position and a lid member is in a partially closing position;
Fig. 2 is a perspective view of the display apparatus according to the embodiment of the present invention, the display apparatus being in a state in which the display panel is in a stored position and the lid member is in a closing position;
Fig. 3 is a side elevational view of the display apparatus in the state in which the display panel is in the projecting position and the lid member is in the partially closing position;
Fig. 4 is a side elevational view of the display apparatus in the state in which the display panel is in the projecting position and the lid member is in the partially closing position for explanation of an operation of a lid member driving mechanism, a casing being omitted;
Fig. 5 is a side elevational view of the display apparatus in the state in which the display panel is in the stored position and the lid member is in the closing position for explanation of the operation of the lid member driving mechanism, the casing being omitted;
Fig. 6 is a side elevational view of the display apparatus in a state in which the display panel is in a tilting position such that the display panel partly projects upwardly from the casing, left part of the display apparatus being omitted;
Fig. 7 is a perspective view of the display panel in the projecting position guided by a connected moving member when viewed from below;
Fig. 8 is a perspective view of the display panel in the projecting position, the lid member in the partially closing position, and the lid member driving mechanism;
Fig. 9 is a perspective view of the display panel in the projecting position, the lid member in the partially closing position, and the lid member driving mechanism when viewed from below; and
Fig. 10 is a perspective view of the display panel in the stored position, the lid member in the closing position, and the lid member driving mechanism.

### DESCRIPTION OF THE PREFERRED EMBODIMENTS

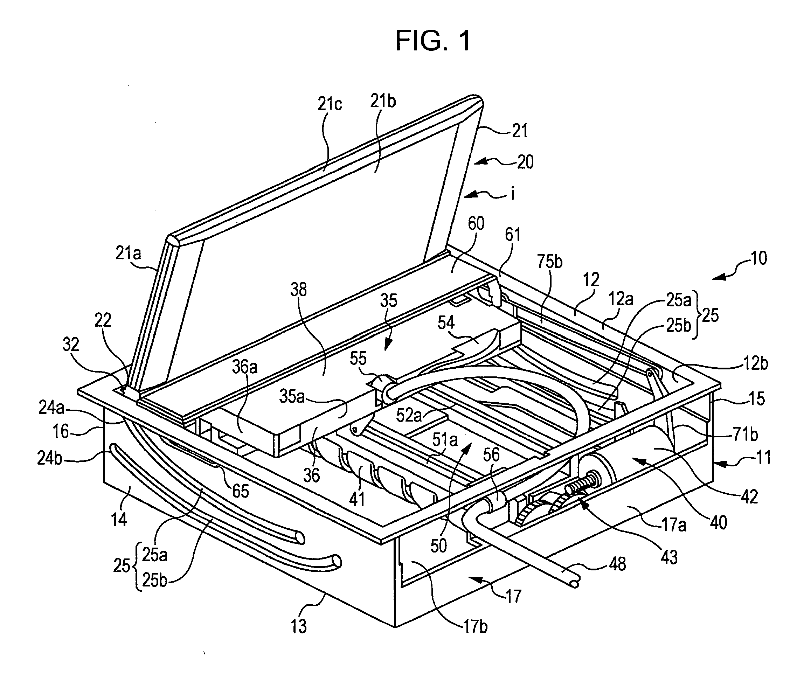

As illustrated in Fig. 1 and the other figures, the display apparatus, indicated at 10, according to an embodiment of the present invention includes a casing 11. The casing 11 includes metal plates or is made of hard synthetic resin.

The casing 11 includes a ceiling portion 12. The ceiling portion 12 includes a rectangular exterior frame 12a surrounding a ceiling opening 12b which allows the cavity of the casing 11 to be upwardly opened. The casing 11 further includes a bottom plate 13 which closes the cavity of the casing 11 from below. The exterior frame 12a of the ceiling portion 12 is parallel to the bottom plate 13.

The casing 11 includes a left side plate 14 and a right side plate 15. The left side plate 14 and the right side plate 15 serve as planes parallel to each other. The left side plate 14 and the right side plate 15 each include a display panel guide 25 that guides a display panel.

The casing 11 includes a front plate 16 which closes the cavity of the casing 11 from the front. The casing 11 includes a rear portion 17 whose lower part is closed by a rear plate 17a. The rear portion 17 includes, as upper part, a rear opening 17b which allows the cavity of the casing 11 to be rearwardly opened. The front plate 16 and the rear plate 17a are parallel to each other.

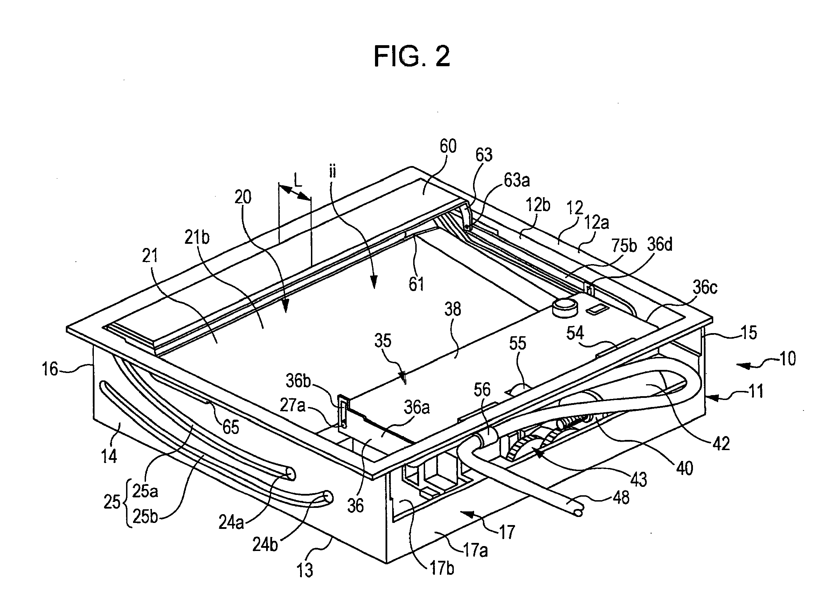

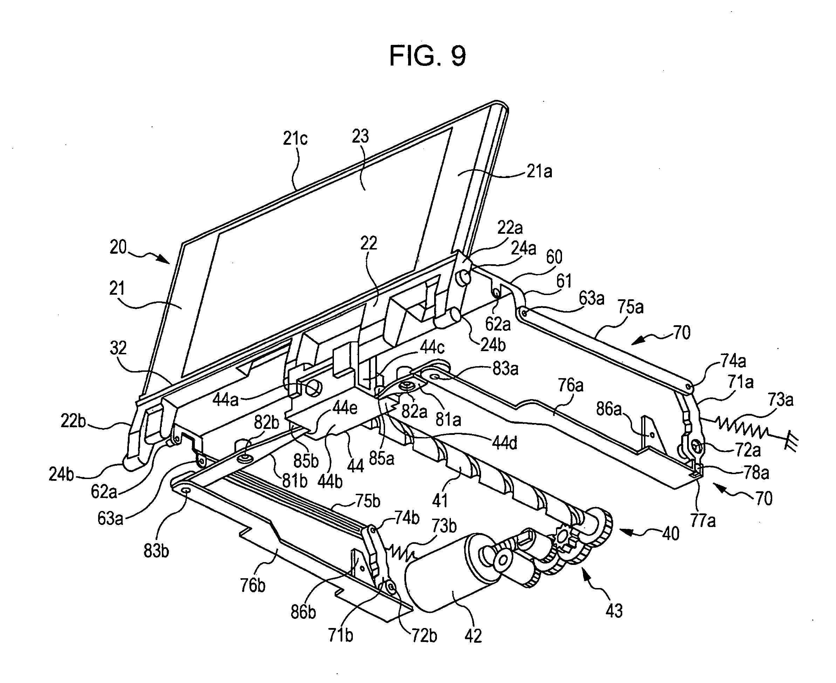

Referring to Figs. 1 and 2, the casing 11 supports a display panel 20 which moves in the cavity of the casing so as to stand upward. The display panel 20 includes a panel case 21, serving as upper part of the display panel 20, and a panel base 22, serving as lower part thereof. The panel case 21 and the panel base 22 are formed of synthetic resin integrally with each other into a single unit. The panel case 21 is a rectangular low-profile member and houses a liquid crystal display. Referring to Fig. 9, a display screen 23 of the liquid crystal display is exposed in a front surface 21a of the panel case 21. Referring to Fig. 1, a rear surface 21b of the panel case 21 is closed.

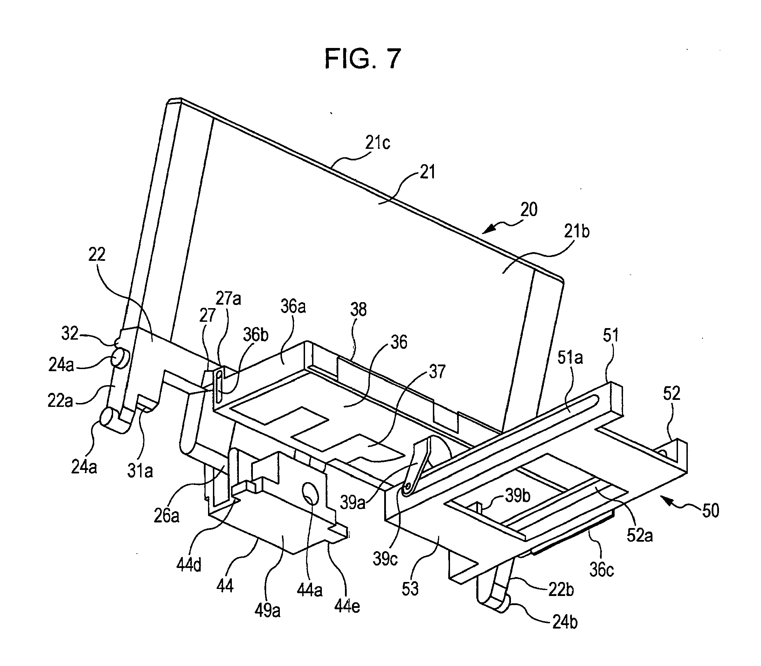

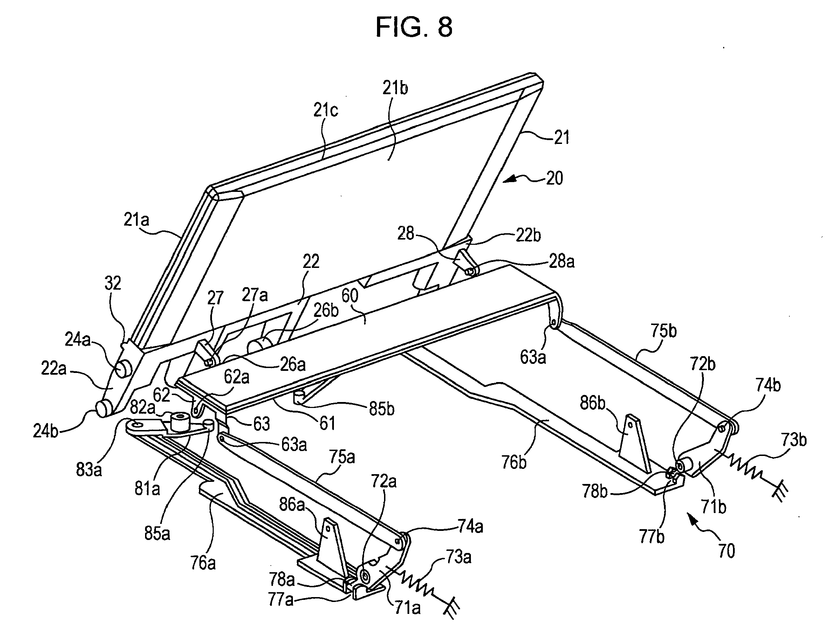

Referring to Figs. 7 and 8, a pair of sliding protrusions 24a and 24b are formed integrally with a left side surface 22a of the panel base 22. Similarly, another pair of sliding protrusions 24a and 24b are formed integrally with a right side surface 22b of the panel base 22.

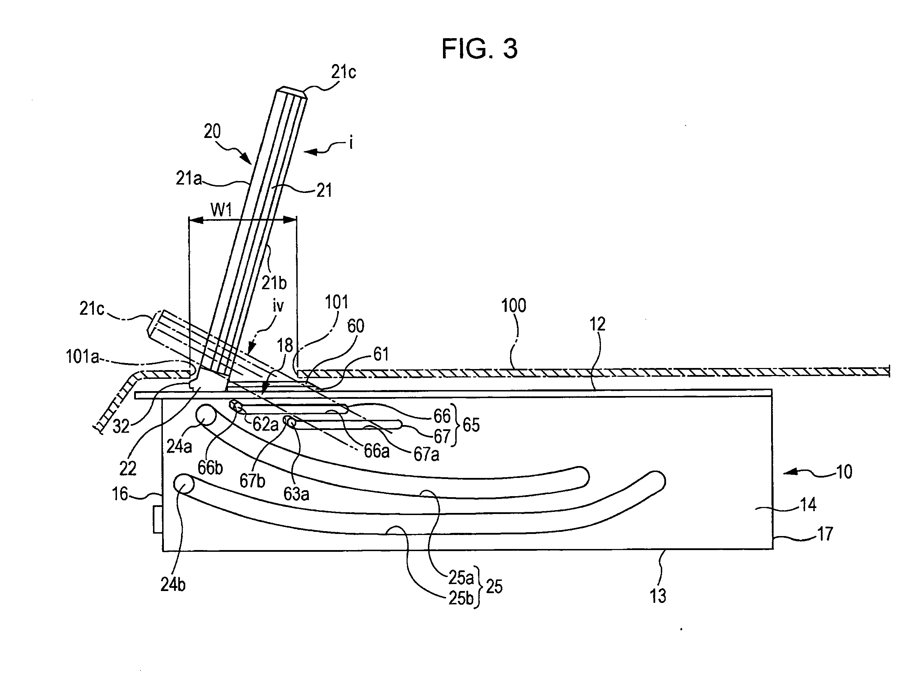

As illustrated in, for example, Figs. 1 and 2, the display panel guide 25 positioned in the left side plate 14 of the casing 11 includes an upper guiding elongated hole 25a and a lower guiding elongated hole 25b. Similarly, the display panel guide 25 in the right side plate 15 of the casing 11 also includes an upper guiding elongated hole 25a and a lower guiding elongated hole 25b. The upper guiding elongated holes 25a and the lower guiding elongated holes 25b are arranged in the left side plate 14 and the right side plate 15 such that the holes extend through each plate. Referring to Fig. 3, the upper guiding elongated hole 25a and the lower guiding elongated hole 25b are arranged along curves protruding toward the bottom surface.

The sliding protrusion 24a on the left side surface 22a of the panel base 22 is slidably fitted in the upper guiding elongated hole 25a in the left side plate 14 and the sliding protrusion 24b thereon is slidably fitted in the lower guiding elongated hole 25b in the left side plate 14. In addition, the sliding protrusions 24a and 24b on the right side surface 22b of the panel base 22 are slidably fitted in the upper guiding elongated hole 25a and the lower guiding elongated hole 25b in the right side plate 15, respectively.

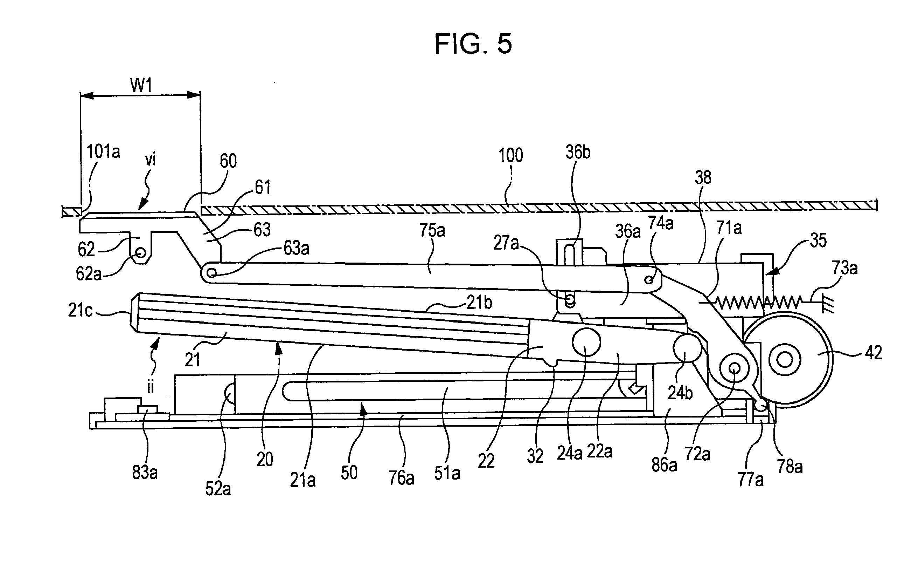

The sliding protrusions 24a and 24b are guided by the upper guiding elongated holes 25a and the lower guiding elongated holes 25b, so that the display panel 20 can move between a projecting position i illustrated in Figs. 1, 3, and 4 and a stored position ii illustrated in Figs. 2 and 5.

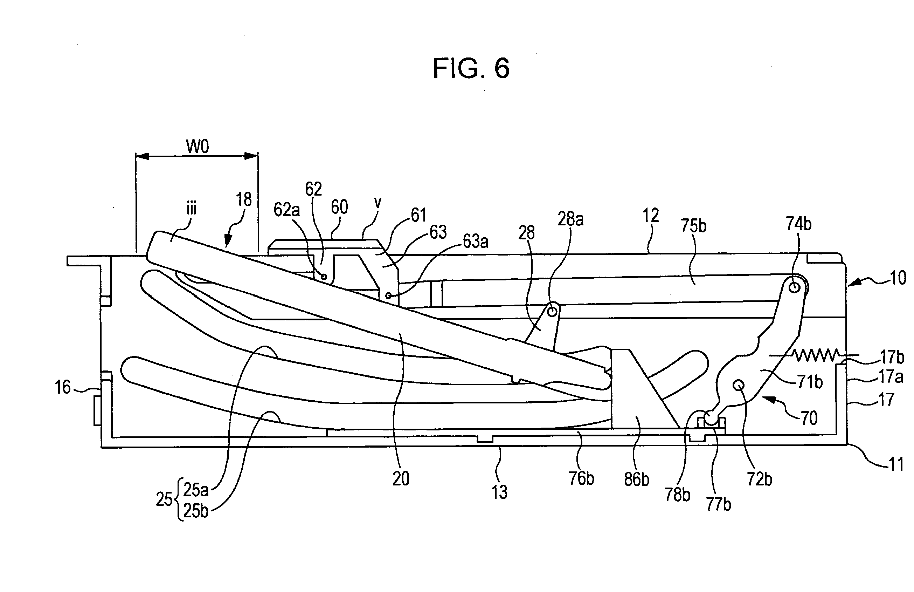

Referring to Fig. 5, the display panel 20 in the stored position ii is positioned in such a posture that the front surface 21a faces the bottom surface of the casing 11 at a slight angle or in substantially parallel thereto. When the display panel 20 shifts from the stored position ii to the projecting position i, the posture of the display panel 20 changes such that an upper end 21c of the panel case 21 rises to a level higher than the ceiling portion 12 of the casing 11. Fig. 6 illustrates the display panel 20 in a tilting position iii where the panel case 21 of the display panel 20 is rising. In Fig. 3, a tilting position iv where the panel case 21 is rising is illustrated by the chain double-dashed line.

Referring to Fig. 6, a range having a width W0 is a movement region 18 in the ceiling portion 12 of the casing 11. While the display panel 20 moves from the stored position ii through the tilting positions iii and iv to the projecting position i, the display panel 20 passes in the movement region 18 in the ceiling portion 12.

As illustrated in Fig. 3 or Fig. 5, the display apparatus 10 is positioned under a body panel 100. In the case where the display apparatus 10 is installed as an in-vehicle unit on a car, the body panel 100 is a dashboard or instrument panel.

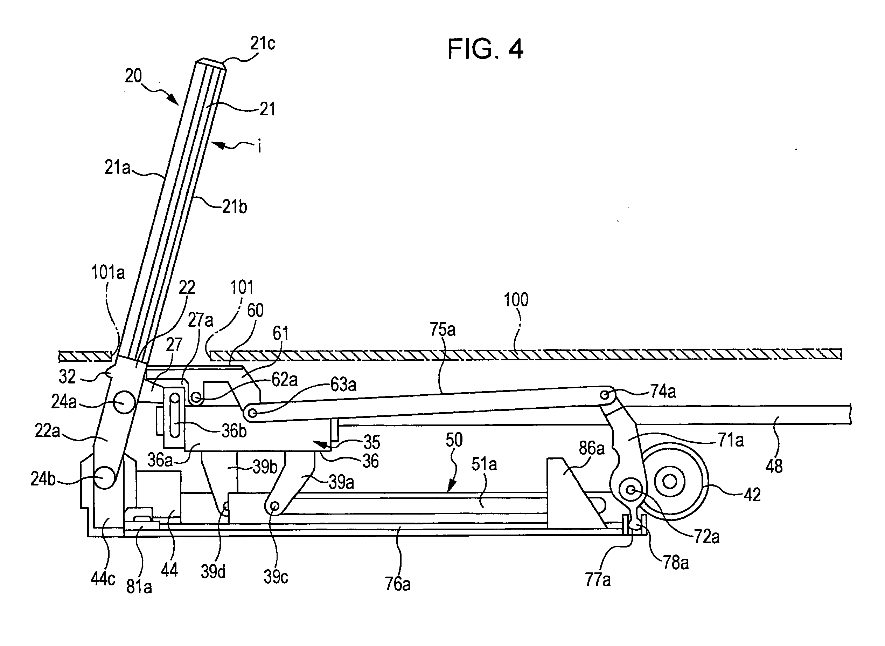

The body panel 100 has an opening 101. The width, W1, of the opening 101 in a front-back direction is equal to or slightly greater than the width W0 of the movement region 18. While the display apparatus 10 is positioned under the body panel 100, the movement region 18 in the ceiling portion 12 of the casing 11 faces the lower surface of the opening 101. Referring to Fig. 4, while the display panel 20 is in the projecting position i, almost the whole of the panel case 21 upwardly projects higher than the body panel 100 such that the entire display screen 23 is positioned higher than the surface of the body panel 100. Thus, a person sitting in the car can see the display screen 23.

Referring to Fig. 9, the panel base 22 includes a ridge 32 extending from side to side on the front surface thereof such that the ridge 32 is positioned under the display screen 23. As illustrated in Fig. 3, while the display panel 20 is in the projecting position i, the ridge 32 faces lower part of a front edge 101a of the opening 101 of the body panel 100 such that a narrow clearance between the front edge 101a and the display panel 20 is covered from below.

As illustrated in, for example, Figs. 1 and 9, a transfer mechanism 40 that allows the display panel 20 to move between the projecting position i and the stored position ii is provided in the casing 11.

The transfer mechanism 40 includes a screw shaft 41 extending in the front-back direction. Front and rear ends of the screw shaft 41 are rotatably supported by bearings arranged in the casing 11. A motor 42 is placed at the back of the casing 11. A torque produced by the motor 42 is decelerated by a speed reducing gear train 43 and is then transmitted to the screw shaft 41.

As illustrated in, for example, Figs. 7 and 9, the transfer mechanism 40 includes an advancing and receding member 44. The advancing and receding member 44 has an internally threaded hole 44a extending therethrough in the front-back direction. The above-described screw shaft 41 is screwed to the internally threaded hole 44a. When the screw shaft 41 is rotated by the motor 42, the advancing and receding member 44 is moved forward or backward. The advancing and receding member 44 is made of synthetic resin or light metal, such as aluminum. The advancing and receding member 44 has a lower surface 44b that is a flat face. When the screw shaft 41 is rotated, the lower surface 44b slides on the upper surface of the bottom plate 13 of the casing 11 while being in face contact with the upper surface, so that the advancing and receding member 44 moves forward or backward without rotating.

The screw shaft 41, the motor 42, and the speed reducing gear train 43 constitute an advancing-receding driving mechanism for moving the advancing and receding member 44 forward and backward.

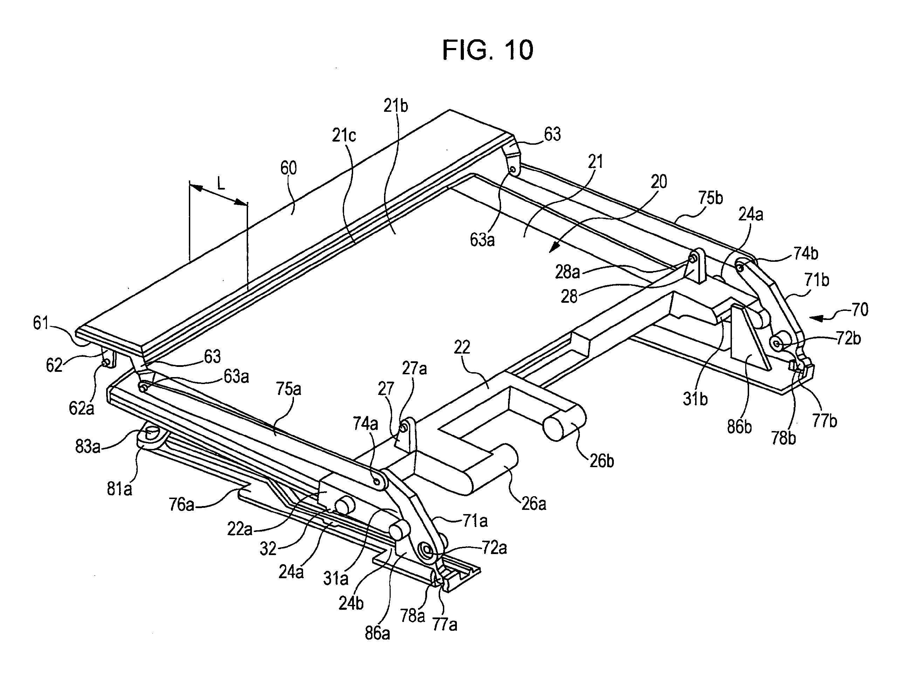

Referring to Fig. 9, the advancing and receding member 44 has driving grooves 44c extending in an up-down direction. As illustrated in, for example, Fig. 10, the panel base 22 of the display panel 20 has a pair of connecting protrusions 26a and 26b such that the connecting protrusions 26a and 26b are formed integrally with the lower end of the panel base 22. The connecting protrusions 26a and 26b are slidably fitted in the driving grooves 44c.

When the advancing and receding member 44 recedes due to rotation of the screw shaft 41 by the motor 42 of the advancing-receding driving mechanism, the connecting protrusions 26a and 26b are pulled backward through the driving grooves 44c. When the advancing and receding member 44 advances, the connecting protrusions 26a and 26b are pressed forward through the driving grooves 44c. At this time, the posture of the display panel 20 is controlled by the display panel guides 25 in the casing 11, such that the display panel 20 shifts from the stored position ii illustrated in Figs. 2 and 5 through the tilting position iii illustrated in Fig. 6 and the tilting position iv indicated by the chain double-dashed line in Fig. 3 to the projecting position i illustrated in Figs. 1, 3, and 4.

Referring to Figs. 1 and 2, a connected moving member 35 moving in the front-back direction is placed in the casing 11. As illustrated in, for example, Fig. 7, the connected moving member 35 includes a support 36, a circuit board 37 positioned on the support 36, and a cover 38 that covers the circuit board 37. The support 36 and the cover 38 are metal plates and function as a shielding case for protecting the circuit board 37.

A movement guiding member 50 that guides the connected moving member 35 forward and backward is placed in the casing 11. Referring to Fig. 7, the movement guiding member 50 includes a first guiding portion 51, a second guiding portion 52, and a supporting portion 53 supporting the first and second guiding portions 51 and 52 such that the portions are formed integrally with one another. Referring to Figs. 4 and 5, the supporting portion 53 is secured to the upper surface of the bottom plate 13 of the casing 11. The first guiding portion 51 has a first guiding elongated hole 51a and the second guiding portion 52 has a second guiding elongated hole 52a. The first and second guiding elongated holes 51a and 52a are parallel to each other and extend in the front-back direction in parallel to the bottom plate 13 of the casing 11.

The first and second guiding elongated holes 51a and 52a have the same length in the front-back direction. Referring to Figs. 4 and 5, the second guiding elongated hole 52a is positioned forward of the first guiding elongated hole 51a. In other words, the front end of the second guiding elongated hole 52a is closer to the front plate 16 than that of the first guiding elongated hole 51a.

Referring to Figs. 4 and 7, the support 36 of the connected moving member 35 includes a first support leg 39a and a second support leg 39b which extend downwardly. A first sliding protrusion 39c is secured to the lower end of the first support leg 39a and a second sliding protrusion 39d is secured to the lower end of the second support leg 39b. Referring to Fig. 4, the second support leg 39b and the second sliding protrusion 39d are positioned forward of the first support leg 39a and the first sliding protrusion 39c.

The first sliding protrusion 39c is slidably fitted in the first guiding elongated hole 51a and the second sliding protrusion 39d is slidably fitted in the second guiding elongated hole 52a. Thus, the connected moving member 35 is movable forward and backward in the casing 11. Referring to Fig. 4, the sliding engagement between the first sliding protrusion 39c and the first guiding elongated hole 51a and that between the second sliding protrusion 39d and the second guiding elongated hole 52a are spaced apart in the front-back direction. Accordingly, the connected moving member 35 is movable forward and backward while being kept in parallel to the bottom plate 13 without tilting above the movement guiding member 50.

Referring to Figs. 2 and 7, the support 36 of the connected moving member 35 includes a left side plate 36a bent so as to upwardly extend from the support 36. The left side plate 36a has a connecting elongated hole 36b extending in the up-down direction in front part thereof. In addition, the support 36 includes a right side plate 36c bent so as to upwardly extend from the support 36. The right side plate 36c has a connecting elongated hole 36d extending in the up-down direction in front part thereof. Referring to Fig. 8, a pair of connecting members 27 and 28 projecting backward are formed integrally with the panel base 22 of the display panel 20. The connecting members 27 and 28 include connecting protrusions 27a and 28a such that the connecting protrusions 27a and 28a are formed integrally with the projecting ends of the connecting members 27 and 28, respectively.

Referring to Figs. 2 and 7, the connecting protrusion 27a is fitted in the connecting elongated hole 36b in the left side plate 36a of the support 36 and the connecting protrusion 28a is fitted in the connecting elongated hole 36d in the right side plate 36c such that the display panel 20 is connected to the connected moving member 35. When the screw shaft 41 is rotated and the advancing and receding member 44 moves forward or backward such that the display panel 20 moves between the projecting position i and the stored position ii, therefore, the connected moving member 35 moves forward or backward accordingly.

Referring to Figs. 1 and 4, when the display panel 20 shifts to the projecting position i, the connected moving member 35 moves forward in the casing 11 above the first and second guiding portions 51 and 52 while being kept in parallel to the bottom plate 13. Referring to Figs. 2 and 5, when the display panel 20 shifts to the stored position ii, the connected moving member 35 moves backward in the casing 11 while being kept in parallel to the bottom plate 13.

A display driving circuit that drives the liquid crystal display housed in the display panel 20 and a backlight driving circuit that drives a backlight for the liquid crystal display are mounted on the circuit board 37 in the connected moving member 35. The circuit board 37 in the connected moving member 35 is connected to the display panel 20 through a flexible substrate having a shielding function and a connection wiring member, such as a flat cable, such that the display driving circuit and the backlight driving circuit on the circuit board 37 are electrically connected to the liquid crystal display.

Referring to Figs. 1 and 2, a wiring member 48 extending from the outside is directly connected to the circuit board 37 in the connected moving member 35. The wiring member 48 extends from a controller or control circuit and a power supply circuit arranged in the body panel 100 through the rear opening 17b of the rear portion 17 of the casing 11 to the inside of the casing 11. The wiring member 48 includes a video signal line and a power supply line. The video signal line is a shielded line. The video signal line and the power supply line are bundled together in the single wiring member 48.

Two plugs 54 and 55 are attached to one end of the wiring member 48. The plug 55 is connected to the video signal line in the wiring member 48 and the plug 54 is connected to the power supply line in the wiring member 48.

The circuit board 37 is provided with a video signal connector and a power supply connector. The connectors are arranged in a rear end portion 35a of the connected moving member 35. The plug 55 at the end of the wiring member 48 is removably connected to the video signal connector and the plug 54 is removably connected to the power supply connector.

Referring to Fig. 2, when the display panel 20 shifts to the stored position ii, the connected moving member 35 accordingly moves to the back of the casing 11. At this time, the video signal connector and the power supply connector arranged in the connected moving member 35 face the inner side of the rear opening 17b of the casing 11. Since the video signal connector and the power supply connector are positioned at the same level as an opening area, serving as the rear opening 17b, and appear in the opening area, the plugs 55 and 54 of the wiring member 48 can be directly connected to the video signal connector and the power supply connector.

In the display apparatus 10 in Figs. 1 and 2, a clamping member 56 is attached to the upper end of the rear opening 17b of the casing 11 and the wiring member 48 is clamped by the clamping member 56. A portion of the wiring member 48 between the part clamped by the clamping member 56 and the end connected to the plugs 55 and 54 is bent and deformed in accordance with the forward or backward movement of the connected moving member 35 in the casing 11.

As illustrated in Fig. 2, when the display panel 20 shifts to the stored position ii and the connected moving member 35 recedes accordingly, the bent and deformed portion of the wiring member 48 is permitted to partly protrude from the rear opening 17b to the rear of the casing 11. Accordingly, any reasonable bending force does not act on the wiring member 48 within the casing 11. Advantageously, this prevents deterioration of the wiring member 48 and disconnection between the lines in the wiring member 48 and the plugs 54 and 55.

As illustrated in Fig. 2, when the connected moving member 35 is moved backward, the wiring member 48 can be directly connected to the circuit board 37. It is therefore unnecessary to arrange connectors in the rear portion 17 of the casing 11. Internal wiring members connecting the connectors to the circuit board 37 can also be omitted. Thus, the number of parts of the display apparatus 10 is reduced. This results in a reduction in manufacturing cost. Furthermore, since it is unnecessary to arrange connectors in the rear portion 17, the casing 11 can be easily reduced in dimension in the front-back direction.

Referring to Figs. 1 and 2, the display apparatus 10 includes a lid member 60. The lid member 60 is elongated and plate-shaped and has a width L in the front-back direction which is substantially equal to the width W1 in the front-back direction of the opening 101 of the body panel 100 illustrated in Fig. 3.

Referring to Fig. 10, the lid member 60 is secured to a lid support member 61. The lid support member 61 includes a front arm 62 and a rear arm 63 arranged on the left thereof such that the arms extend downwardly. The front arm 62 includes a sliding protrusion 62a in the lower end thereof and the rear arm 63 includes a sliding protrusion 63a in the lower end thereof. Similarly, a front arm 62, a rear arm 63, and sliding protrusions 62a and 63a are arranged on the right of the lid support member 61.

Referring to Fig. 3, a lid member guide 65 is disposed in upper part of the left side plate 14 of the casing 11. The lid member guide 65 includes an upper guiding elongated hole 66 and a lower guiding elongated hole 67. The upper guiding elongated hole 66 and the lower guiding elongated hole 67 are arranged such that the holes extend through the left side plate 14. The sliding protrusion 62a on the left of the lid support member 61 is slidably fitted in the upper guiding elongated hole 66 and the sliding protrusion 63a is slidably fitted in the lower guiding elongated hole 67. In addition, a lid member guide 65 including an upper guiding elongated hole 66 and a lower guiding elongated hole 67 is disposed in the right side plate 15 of the casing 11. The sliding protrusions 62a and 63a on the right of the lid support member 61 are slidably fitted in the upper guiding elongated hole 66 and the lower guiding elongated hole 67, respectively.

As illustrated in Fig. 3, the upper guiding elongated hole 66 includes a horizontal guiding portion 66a parallel to the ceiling portion 12 and an upward guiding portion 66b obliquely upwardly extending from the front end of the horizontal guiding portion 66a. The lower guiding elongated hole 67 similarly includes a horizontal guiding portion 67a and an upward guiding portion 67b obliquely upwardly extending from the front end of the horizontal guiding portion 67a.

The sliding protrusions 62a and 63a are slid in the lid member guides 65 arranged in the left side plate 14 and the right side plate 15 of the casing 11, so that the lid member 60 and the lid support member 61 are guided forward or backward. When each sliding protrusion 62a is moved to the rear end of the horizontal guiding portion 66a of the corresponding upper guiding elongated hole 66 and each sliding protrusion 63a is moved to the rear end of the horizontal guiding portion 67a of the corresponding lower guiding elongated hole 67, the lid member 60 attains an opening position v as illustrated in Fig. 6. At this time, the lid member 60 is positioned away from the movement region 18, indicated by the width W0, and the opening 101 of the body panel 100 such that the lid member 60 is located at the rear of the movement region 18 and the opening 101.

Referring to Figs. 1, 3, and 4, while the display panel 20 is in the projecting position i, when each sliding protrusion 62a is moved forward in the horizontal guiding portion 66a of the corresponding upper guiding elongated hole 66 and each sliding protrusion 63a is moved forward in the horizontal guiding portion 67a of the corresponding lower guiding elongated hole 67, the lid member 60 attains a partially closing position.

When each sliding protrusion 62a is moved to the front end of the upward guiding portion 66b of the corresponding upper guiding elongated hole 66 and each sliding protrusion 63a is moved to the front end of the upward guiding portion 67b of the corresponding lower guiding elongated hole 67, the lid member 60 and the lid support member 61 attain a closing position vi as illustrated in Fig. 5. At this time, the movement region 18 indicated by the width W0 in Fig. 6 is covered with the lid member 60. Furthermore, the upward guiding portions 66b and 67b allow the lid support member 61 to be raised, so that the lid member 60 in the closing position vi enters the opening 101 of the body panel 100 from below such that the opening 101 is closed by the lid member 60.

As illustrated in Figs. 8 and 9, a lid member driving mechanism 70 for moving the lid support member 61 is disposed within the casing 11.

The lid member driving mechanism 70 includes a link mechanism. The link mechanism includes a pair of pivotable biased links 71a and 71b. The left pivotable biased link 71a has a support hole 72a rotatably supported by a support shaft secured to the inner surface of the left side plate 14 of the casing 11. The right pivotable biased link 71b has a support hole 72b rotatably supported by a support shaft secured to the inner surface of the right side plate 15 of the casing 11.

The pivotable biased links 71a and 71b are biased clockwise by spring members 73a and 73b, respectively. As illustrated in, for example, Figs. 8 and 9, the spring members 73a and 73b are extension springs. The spring members 73a and 73b may be torsion springs.

The upper end of the left pivotable biased link 71a is pivotably connected through a connecting shaft 74a to the rear end of an elastic link 75a. The front end of the elastic link 75a is pivotably connected to the sliding protrusion 63a positioned on the left of the lid support member 61. Similarly, a connecting shaft 74b connected to the upper end of the right pivotable biased link 71b is connected through an elastic link 75b to the sliding protrusion 63a on the right of the lid support member 61.

The left and right elastic links 75a and 75b constitute an elasticity providing mechanism in the link mechanism. Each elastic link is made of a thin metal plate or a thin synthetic resin plate which is long in the front-back direction and is capable of elastically deforming and bending between the connecting shaft 74a or 74b and the sliding protrusion 63a.

Referring to Fig. 8, the link mechanism, constituting the lid member driving mechanism 70, includes sliding links 76a and 76b positioned on the bottom plate 13 of the casing 11. The sliding links 76a and 76b are guided and supported by guiding supports provided for the bottom plate 13 such that the sliding links 76a and 76b are slidable or movable linearly on the surface of the bottom plate 13 in the front-back direction. The left sliding link 76a has a connecting groove 77a in the rear end thereof. A lower end 78a of the left pivotable biased link 71a is fitted in the connecting groove 77a. Similarly, a lower end 78b of the right pivotable biased link 71b is fitted in a connecting groove 77b positioned in the rear end of the right sliding link 76b.

As illustrated in Figs. 8 and 9, a pair of forced links 81a and 81b are arranged above the bottom plate 13 of the casing 11. The left forced link 81a has a support hole 82a rotatably supported by a support shaft secured to the bottom plate 13. One end of the forced link 81a is pivotably connected through a connecting shaft 83a to the front end of the left sliding link 76a. The right forced link 81b has a support hole 82b rotatably supported by a support shaft secured to the bottom plate 13. One end of the forced link 81b is pivotably connected through a connecting shaft 83b to the front end of the right sliding link 76b.

The left forced link 81a includes a forced protrusion 85a formed integrally with the other end thereof. The right forced link 81b includes a forced protrusion 85b formed integrally with the other end thereof. Referring to Fig. 9, the advancing and receding member 44 integrally includes a pressing portion 44d capable of pressing the forced protrusion 85a and a pressing portion 44e capable of pressing the forced protrusion 85b.

Referring to Figs. 8 and 9, the left sliding link 76a includes a rear forced portion 86a upwardly projecting from rear part thereof. The right sliding link 76b includes a rear forced portion 86b upwardly projecting from rear part thereof. Referring to Fig. 10, the panel base 22 of the display panel 20 integrally includes a rear pressing portion 31a capable of pressing the rear forced portion 86a and a rear pressing portion 31b capable of pressing the rear forced portion 86b in base end parts.

An operation of the display apparatus 10 will now be described.

Referring to Figs. 2 and 5, the screw shaft 41 is rotated by the motor 42 of the advancing-receding driving mechanism included in the transfer mechanism 40, such that the advancing and receding member 44 moves to the backmost position. At this time, the driving grooves 44c of the advancing and receding member 44 allow the connecting protrusions 26a and 26b of the panel base 22 to be pulled backward. The display panel 20 is accordingly guided by the display panel guides 25 in the casing 11 and is then stored into the casing 11 such that it attains the stored position ii.

Referring to Fig. 10, when the display panel 20 attains the stored position ii, the rear forced portion 86a of the left sliding link 76a is pressed backward by the rear pressing portion 31a on the left rear of the panel base 22 and the rear forced portion 86b of the right sliding link 76b is pressed backward by the rear pressing portion 31b on the right rear of the panel base 22. Consequently, the left sliding link 76a and the right sliding link 76b are moved backward together. The connecting groove 77a of the sliding link 76a allows the pivotable biased link 71a to be forcibly pivoted counterclockwise against biasing force of the spring member 73a. The connecting groove 77b of the sliding link 76b allows the pivotable biased link 71b to be forcibly pivoted counterclockwise against biasing force of the spring member 73b.

Thus, the lid support member 61 is pressed forward by the elastic links 75a and 75b. Each sliding protrusion 62a of the lid support member 61 is moved to the front end of the upward guiding portion 66b of the upper guiding elongated hole 66 in the corresponding lid member guide 65 illustrated in Fig. 2 and each sliding protrusion 63a is moved to the front end of the upward guiding portion 67b of the lower guiding elongated hole 67, so that the lid member 60 is raised higher than the ceiling portion 12 of the casing 11. The movement region 18, having the width W0 in the front-back direction, of the display panel 20 is covered by the lid member 60. As illustrated in Fig. 5, the lid member 60 is raised from below into the opening 101 of the body panel 100, so that the opening 101 is closed. The closing of the opening 101 by the lid member 60 keeps foreign matter from entering the casing 11.

Referring to Fig. 2, the connecting protrusions 27a and 28a arranged on the panel base 22 are fitted in the connecting elongated holes 36b and 36d arranged in the support 36 of the connected moving member 35, respectively, such that the connected moving member 35 is connected to the panel base 22. When the display panel 20 recedes to the stored position ii within the casing 11, therefore, the connected moving member 35 accordingly recedes within the casing 11. The wiring member 48 connected to the circuit board 37 in the connected moving member 35 can bend and deform in its part positioned between the inside of the rear opening 17b of the casing 11 and the rear of the casing. Accordingly, bending stress acting on the wiring member 48 can be reduced.

When the connected moving member 35 moves to the backmost position, the connectors arranged in the circuit board 37 face the inside of the rear opening 17b. In an operation of attaching the display apparatus 10 to the inside of the body panel 100, after the display panel 20 is moved to the stored position ii as illustrated in Fig. 2, the plugs 54 and 55 of the wiring member 48 can be directly connected to the connectors in the circuit board 37.

When an operation of projecting the display panel 20 is performed through an operation unit (not illustrated), the motor 42 of the advancing-receding driving mechanism starts and the screw shaft 41 is then rotated, so that the advancing and receding member 44 starts advancing. The driving grooves 44c of the advancing and receding member 44 forwardly press the connecting protrusions 26a and 26b of the panel base 22, so that the display panel 20 advances toward the projecting position i while being guided by the display panel guides 25 arranged in the side plates 14 and 15 of the casing 11.

Referring to Fig. 6, just after the display panel 20 starts advancing from the stored position ii, the rear pressing portions 31a and 31b of the panel base 22 move away from the rear forced portions 86a and 86b arranged on the sliding links 76a and 76b. At this moment, the pivotable biased links 71a and 71b are pivoted clockwise by the biasing force of the spring members 73a and 73b, so that the lid support member 61 and the lid member 60 are pulled backward through the elastic links 75a and 75b. The lid support member 61 moves backward while being guided by the lid member guides 65 arranged in the side plates 14 and 15 of the casing 11. The lid member 60 promptly moves to the opening position v which is away from the movement region 18 of the display panel 20 and the opening 101 of the body panel 100.

Just after the display panel 20 forwardly moves from the stored position ii, the lid member 60 is promptly moved to the opening position v by the biasing force of the spring members 73a and 73b, so that the movement region 18 and the opening 101 are promptly opened. Accordingly, any inconvenience, such as hitting of the display panel 20 against the lid member 60, does not occur while the display panel 20 moves through the tilting position iii illustrated in Fig. 6 and the tilting position iv illustrated in Fig. 3 to the projecting position i.

After that, the advancing and receding member 44 is advanced by rotation of the screw shaft 41, so that the display panel 20 projects from the opening 101 of the body panel 100 and attains the projecting position i. Almost simultaneously, as illustrated in Fig. 9, the forced protrusions 85a and 85b are pressed forward by the pressing portions 44d and 44e of the advancing and receding member 44 and the forced links 81a and 81b are pivoted, so that the sliding links 76a and 76b are moved backward. Accordingly, the pivotable biased links 71a and 71b are pivoted counterclockwise against the biasing force of the spring members 73a and 73b and the elastic links 75a and 75b advance, so that the lid support member 61 is moved forward. Consequently, the front end of the lid support member 61 or the lid member 60 abuts against the rear of the display panel 20 in the projecting position i as illustrated in Figs. 3 and 4.

Thus, while the display panel 20 is in the projecting position i, a space formed at the rear of the display panel 20 in the movement region 18 and a space formed at the rear of the display panel 20 in the opening 101 are covered by the lid member 60.

The lid support member 61 or the lid member 60 does not move further forward. Furthermore, force produced by the pivoting of the forced links 81a and 81b applies force that causes the pivotable biased links 71a and 71b to pivot counterclockwise. Accordingly, the elastic links 75a and 75b bend by elastic deformation, so that the front end of the lid support member 61 or the lid member 60 is pressed against base end part of the display panel 20. Accordingly, a clearance does not tend to be formed between the display panel 20 and the lid member 60. The lid member 60 reliably closes a space, where the display panel 20 is not positioned, at the back of the opening 101 in the body panel 100.

While the display panel 20 is in the projecting position i as illustrated in Fig. 3, the ridge 32 on the front surface of the panel base 22 faces the lower part of the front edge 101a of the opening 101 of the body panel 100 such that the narrow clearance between the front edge 101a and the display panel 20 is also covered from below. This arrangement prevents formation of clearances at the front and rear of the display panel 20 in the projecting position i.

As regards the elasticity providing mechanism included in the link mechanism, each of the elastic links 75a and 75b may have a structure in which part is elastically deformable and the other part is rigid. Alternatively, each of the elastic links 75a and 75b may include two members connected to each other through a spring such that the link is elastically contractible to reduce the length.

Alternatively, the elastic links 75a and 75b may be replaced with rigid links having no elastically deformable part, each rigid link may have an elongated hole extending in the front-back direction in front end part thereof, the sliding protrusions 63a of the lid support member 61 may be slidably fitted in the elongated holes, and biasing means that biases the sliding protrusions 63a toward the front ends of the elongated holes may be arranged. In this case, when the front end of the lid support member 61 or the lid member 60 abuts against the rear of the display panel 20 in the projecting position i, the sliding protrusions 63a backwardly move relative to the elongated holes against biasing force of the biasing means, such that the lid support member 61 or the lid member 60 can keep abutting against the rear of the display panel 20.

## Claims

1. A display apparatus (10) comprising:
a casing (11);
a display panel (20) stored in the casing;
a transfer mechanism (40) that allows the display panel to move between a stored position (ii) where the display panel is stored in the casing and a projecting position (i) where a free end of the display panel upwardly projects above the casing;
a lid member (60) that is configured to move between a closing position (vi), in which the lid member closes a movement region (18) of the casing, said movement region (18) being provided for movement of the display panel (20) between the stored position and the projecting position of the display panel (20), and an opening position (v) in which the lid member (60) is away from said movement region (18); and
a spring member (73a, 73b) that biases the lid member toward the opening position; **characterized by** means of
a lid member driving mechanism (70) that uses force produced by the movement of the display panel (20) to the projecting position to cause the lid member (60) to move against biasing force of the spring member (73a, 73b) to a partially closing position where the lid member (60) closes a space in the movement region (18) in which the display panel (20) is not positioned;
wherein said lid member driving mechanism (70) includes means for moving the lid member (60) to the closing position (vi) when the display panel (20) is moved to its stored position (ii).

2. The apparatus according to Claim 1, wherein the lid member driving mechanism uses force produced by the movement of the display panel from the projecting position to the stored position to cause the lid member to move to the closing position against the biasing force of the spring member.

3. The apparatus according to Claim 1 or 2,
wherein the transfer mechanism includes
an advancing and receding member (44) that pivotably supports a base end of the display panel,
an advancing-receding driving mechanism that allows the advancing and receding member to advance or recede, and
a display panel guide (25) that allows the display panel to change a posture from the stored position to the projecting position when the advancing and receding member moves from a back position to a front position,
wherein the lid member driving mechanism includes
a lid member guide (65) that guides the lid member between the opening position and the closing position, and
a link mechanism that allows the lid member to move, and
wherein when the advancing and receding member moves to the front position, force produced by the movement of the advancing and receding member causes the link mechanism to be operated such that the lid member moves to the partially closing position.

4. The apparatus according to Claim 3, wherein when the advancing and receding member moves to the back position, the advancing and receding member presses the link mechanism such that the lid member moves to the closing position.

5. The apparatus according to Claim 3 or 4, wherein the link mechanism elastically presses the lid member, shifted to the partially closing position, against the display panel positioned in the movement region.

6. The apparatus according to Claim 5,
wherein the link mechanism includes a link (75a, 75b) that presses the lid member toward the display panel positioned in the movement region such that the lid member moves to the partially closing position, and
wherein the link is an elastic link that elastically deforms to press the lid member against the display panel.

7. The apparatus according to any one of Claims 1 to 6, wherein a body panel (100) that covers the casing is disposed above a ceiling portion (12) of the casing, the body panel has an opening (101) that faces the movement region, the display panel in the projecting position upwardly projects from the opening, the lid member in the partially closing position closes a clearance in which the display panel is not positioned in the opening, and the lid member in the closing position closes the opening while the display panel is in the stored position.

8. The apparatus according to Claim 7, wherein when moving to the closing position, the lid member is raised higher than the ceiling portion of the casing such that the lid member closes the opening from below.

9. The apparatus according to Claim 7 or 8, wherein the display panel includes a ridge (32) on a first surface of the display panel opposite a second surface thereof facing the lid member, the ridge facing lower part of an edge of the opening in the body panel while the display panel is in the projecting position.

10. The apparatus according to any one of Claims 1 to 9, wherein while the display panel is in the stored position, a screen (23) of the display panel faces the bottom surface of the casing.

## Patentansprüche

1. Anzeigevorrichtung (10) aufweisend:
ein Gehäuse (11);
eine Anzeigetafel (20), die in dem Gehäuse untergebracht ist;
einen Transfermechanismus (40), der es ermöglicht, die Anzeigetafel zwischen einer Unterbringungsposition (ii), in der die Anzeigetafel in dem Gehäuse untergebracht ist, und einer hervorstehenden Position (i), in der ein freies Ende der Anzeigetafel über dem Gehäuse nach oben hervorsteht, zu bewegen;
ein Klappenelement (60), das eingerichtet ist, sich zwischen einer schließenden Position (vi), in der das Klappenelement einen Bewegungsbereich (18) des Gehäuses verschließt, und einer geöffneten Position (v), in der das Klappenelement (60) vom Bewegungsbereich (18) entfernt ist, zu bewegen, wobei der Bewegungsbereich (18) für die Bewegung der Anzeigetafel (20) zwischen der Unterbringungsposition und der hervorstehenden Position der Anzeigetafel (20) vorgesehen ist; und
ein Federelement (73a, 73b), welches das Klappenelement in Richtung der geöffneten Position vorspannt;
**gekennzeichnet durch** einen Klappenelement-Antriebsmechanismus (70), der die Kraft, die **durch** die Bewegung der Anzeigetafel (20) in die hervorstehende Position erzeugt wird, nutzt, um zu bewirken, dass sich das Klappenelement (60) gegen die Vorspannkraft des Federelements (73a, 73b) in eine teilweise schließende Position bewegt, in der das Klappenelement (60) einen Raum im Bewegungsbereich (18), in dem die Anzeigetafel (20) nicht positioniert ist, verschließt;
wobei der Klappenelement-Antriebsmechanismus (70) Mittel umfasst, um das Klappenelements (60) in die schließende Position (vi) zu bewegen, wenn die Anzeigetafel (20) in ihrer Unterbringungsposition (ii) bewegt wird.

2. Vorrichtung nach Anspruch 1, wobei der Klappenelement-Antriebsmechanismus Kraft benutzt, die durch die Bewegung der Anzeigetafel von der hervorstehenden Position in die Unterbringungsposition erzeugt wird, um zu bewirken, dass sich das Klappenelement gegen die Vorspannkraft des Federelements in die schließende Position bewegt.

3. Vorrichtung nach Anspruch 1 oder 2, wobei der Transfermechanismus einschließt:
ein sich vor und zurück bewegendes Element (44), das ein Fußende der Anzeigetafel schwenkbar abstützt,
einen Vor- und Zurückbewegungs-Antriebsmechanismus, der es dem sich vor und zurück bewegenden Element ermöglicht, sich vor oder zurück zu bewegen, und
eine Anzeigetafelführung (25), die es der Anzeigetafel ermöglicht, ihre Stellung von der Unterbringungsposition in die hervorstehende Position zu ändern, wenn sich das sich vor und zurück bewegende Element von einer hinteren Position in einer vordere Position bewegt,
wobei der Klappenelement-Antriebsmechanismus aufweist
eine Klappenelementführung (65), die das Klappenelement zwischen der geöffneten Position und der schließenden Position führt, und
einen Verbindungsmechanismus, der es dem Klappenelement ermöglicht, sich zu bewegen, und
wobei eine Kraft, die durch die Bewegung des sich vor und zurück bewegenden Elementes erzeugt wird, wenn sich das vor und zurück bewegende Element nach vorne bewegt, bewirkt, dass der Verbindungsmechanismus so betätigt wird, dass sich das Klappenelement in die teilweise schließende Position bewegt.

4. Vorrichtung nach Anspruch 3, wobei das sich vor und zurück bewegende Element den Verbindungsmechanismus so antreibt, dass sich das Klappenelement in die schließende Position bewegt, wenn sich das vor und zurück bewegende Element in die hintere Position bewegt.

5. Vorrichtung nach Anspruch 3 oder 4, wobei der Verbindungsmechanismus das Klappenelement, das in die teilweise schließende Position verschoben ist, elastisch gegen die Anzeigetafel drückt, die im Bewegungsbereich angeordnet ist.

6. Vorrichtung nach Anspruch 5,
wobei der Verbindungsmechanismus ein Verbindungselement (75a, 75b) aufweist, das das Klappenelement so gegen die Anzeigetafel, die im Bewegungsbereich angeordnet ist, drückt, dass sich das Klappenelement in die teilweise schließende Position bewegt, und
wobei das Verbindungselement ein elastisches Verbindungselement ist, das sich elastisch verformt, um das Klappenelement gegen die Anzeigetafel zu drücken.

7. Vorrichtung nach einem der Ansprüche 1 bis 6, wobei eine Gehäusetafel (100), die das Gehäuse abdeckt, über einem Deckenbereich (12) des Gehäuses angeordnet ist, wobei: die Gehäusetafel eine Öffnung hat, die dem Bewegungsbereich zugewandt ist, die Anzeigetafel in der hervorstehenden Position nach oben aus der Öffnung hervorsteht, das Klappenelement in der teilweise schließenden Position einen freien Bereich in der Öffnung, in dem die Anzeigetafel nicht angeordnet ist, verschließt und das Klappenelement in der schließenden Position die Öffnung verschließt, während die Anzeigetafel in der Unterbringungsposition ist.

8. Vorrichtung nach Anspruch 7, wobei das Klappenelement, wenn es sich in die schließende Position bewegt, höher als der Deckenbereich des Gehäuses angehoben wird, so dass das Klappenelement die Öffnung von unten verschließt.

9. Vorrichtung nach Anspruch 7 oder 8, wobei die Anzeigetafel auf einer ersten Fläche der Anzeigetafel, die einer dem Klappenelement zugewandten zweiten Fläche davon gegenüberliegt, eine Erhöhung (32) aufweist, wobei die Erhöhung einem unteren Bereich eines Randes der Öffnung in der Gehäusetafel gegenüberliegt, während sich die Anzeigetafel in der hervorstehenden Position befindet.

10. Vorrichtung nach einem der Ansprüche 1 bis 9, wobei ein Bildschirm (23) der Anzeigetafel der Unterseite des Gehäuses zugewandt ist, während sich die Anzeigetafel in der untergebrachten Position befindet.

## Revendications

1. Appareil d'affichage (10) comprenant :
un boîtier (11) ;
un panneau d'affichage (20) stocké dans le boîtier ;
un mécanisme de transfert (40) qui permet au panneau d'affichage de se déplacer entre une position rangée (ii) dans laquelle le panneau d'affichage est stocké dans le boîtier et une position saillante (i) dans laquelle une extrémité libre du panneau d'affichage fait saillie vers le haut, au-dessus du boîtier ;
un élément formant couvercle (60) qui est configuré pour se déplacer entre une position de fermeture (vi), dans laquelle l'élément formant couvercle ferme une région de déplacement (18) du boîtier, ladite région de déplacement (18) étant prévue pour le déplacement du panneau d'affichage (20) entre la position rangée et la position saillante du panneau d'affichage (20), et une position d'ouverture (v) dans laquelle l'élément formant couvercle (60) est éloigné de ladite région de déplacement (18) ; et
un élément formant ressort (73a, 73b) qui pousse l'élément formant couvercle vers la position d'ouverture ;
**caractérisé par** :
un mécanisme d'entraînement d'élément formant couvercle (70) qui utilise la force produite par le déplacement du panneau d'affichage (20) jusqu'à la position saillante pour provoquer le déplacement de l'élément formant couvercle (60) à l'encontre de la force de poussée de l'élément formant ressort (73a, 73b) jusqu'à une position de fermeture partielle dans laquelle l'élément formant couvercle (60) ferme un espace dans la région de déplacement (18) dans lequel le panneau d'affichage (20) n'est pas positionné ;
dans lequel ledit mécanisme d'entraînement d'élément formant couvercle (70) comprend un moyen pour déplacer l'élément formant couvercle (60) jusqu'à la position de fermeture (vi) quand le panneau d'affichage (20) est déplacé jusqu'à sa position rangée (ii).

2. Appareil selon la revendication 1, dans lequel le mécanisme d'entraînement d'élément formant couvercle utilise la force produite par le déplacement du panneau d'affichage de la position saillante à la position rangée pour provoquer le déplacement de l'élément formant couvercle jusqu'à la position de fermeture contre la force de poussée de l'élément formant ressort.

3. Appareil selon la revendication 1 ou 2, dans lequel le mécanisme de transfert comprend :
un élément qui avance et se retire (44) qui supporte de façon pivotante une extrémité de base du panneau d'affichage,
un mécanisme d'entraînement d'avancée et de rétraction qui permet à l'élément qui avance et se retire d'avancer ou de se retirer, et
un guide de panneau d'affichage (25) qui permet au panneau d'affichage de changer de position, de la position rangée à la position saillante, quand l'élément qui avance et se retire se déplace d'une position arrière à une position avant,
dans lequel le mécanisme d'entraînement d'élément formant couvercle comprend :
un guide d'élément formant couvercle (65) qui guide l'élément formant couvercle entre la position d'ouverture et la position de fermeture, et
un mécanisme de liaison qui permet le mouvement de l'élément formant couvercle,
et dans lequel, quand l'élément qui avance et se retire se déplace jusqu'à la position avant, la force produite par le déplacement de l'élément qui avance et se retire provoque l'actionnement du mécanisme de liaison, de sorte que l'élément formant couvercle se déplace jusqu'à la position de fermeture partielle.

4. Appareil selon la revendication 3, dans lequel quand l'élément qui avance et se retire se déplace jusqu'à la position arrière, l'élément qui avance et se retire pousse le mécanisme de liaison de telle manière que l'élément formant couvercle se déplace jusqu'à la position de fermeture.

5. Appareil selon la revendication 3 ou 4, dans lequel le mécanisme de liaison presse de façon élastique l'élément formant couvercle, décalé jusqu'à la position de fermeture partielle, contre le panneau d'affichage positionné dans la région de déplacement.

6. Appareil selon la revendication 5,
dans lequel le mécanisme de liaison comprend une liaison (75a, 75b) qui presse l'élément formant couvercle vers le panneau d'affichage positionné dans la région de déplacement de telle manière que l'élément formant couvercle se déplace jusqu'à la position de fermeture partielle, et
dans lequel la liaison est une liaison élastique qui se déforme de façon élastique pour pousser l'élément formant couvercle contre le panneau d'affichage.

7. Appareil selon l'une quelconque des revendications 1 à 6, dans lequel un panneau de corps (100) qui couvre le boîtier est placé au-dessus d'une partie plafond (12) du boîtier, le panneau de corps comporte une ouverture (101) qui fait face à la région de déplacement, le panneau d'affichage dans la position saillante fait saillie vers le haut depuis l'ouverture, l'élément formant couvercle dans la position de fermeture partielle ferme un espace dans lequel le panneau d'affichage n'est pas positionné dans l'ouverture, et l'élément formant couvercle dans la position de fermeture ferme l'ouverture tant que le panneau d'affichage est dans la position rangée.

8. Appareil selon la revendication 7, dans lequel, lors de son déplacement vers la position de fermeture, l'élément formant couvercle est levé plus haut que la partie plafond du boîtier, de sorte que l'élément formant couvercle ferme l'ouverture par le dessous.

9. Appareil selon la revendication 7 ou 8, dans lequel le panneau d'affichage comprend une arête (32) sur une première surface du panneau d'affichage à l'opposé d'une deuxième surface de celui-ci qui fait face à l'élément formant couvercle, l'arête étant en face d'une partie inférieure d'un bord de l'ouverture présente dans le panneau de corps tant que le panneau d'affichage est dans la position saillante.

10. Appareil selon l'une quelconque des revendications 1 à 9, dans lequel, quand le panneau d'affichage est dans la position rangée, un écran (23) du panneau d'affichage se trouve en face de la surface inférieure du boîtier.
